# EUROPEAN PATENT APPLICATION

(11) **EP 1 819 007 A1**
(43) Date of publication of application: **15.08.2007**
(21) Application number: 07102124.0
(22) Date of filing: 12.02.2007
(51) Int. Cl.: H01M 8/06, B01D 19/00, H01M 8/04

(54) **Gas-liquid separator and fuel cell system comprising the same**

(30) Priority: 10.02.2006 KR 20060013145
(71) Applicant: Samsung SDI Co., Ltd., Suwon-si, Gyeonggi-do (KR)
(72) Inventor: JANG, Won Hyouk, c/o Samsung SDI Co., Ltd., Kiheung-eup, Yongin-si, Gyeonggi-do (KR); LEE, Jong Ki, c/o Samsung SDI Co., Ltd., Kiheung-eup, Yongin-si, Gyeonggi-do (KR); HA, Myeong Ju, c/o Samsung SDI Co., Ltd., Kiheung-eup, Yongin-si, Gyeonggi-do (KR); CHO, Eun Suk, c/o Samsung SDI Co., Ltd., Kiheung-eup, Yongin-si, Gyeonggi-do (KR)
(74) Representative: Hengelhaupt, Jürgen

(57) **Abstract**

A gas and liquid separator used in a fuel cell, the gas and liquid separator including: a fuel guidance pipe having one or more opening portions on a surface thereof; and a gas and liquid separating film provided on the opening portions of the fuel guidance pipe and transmitting only gas. Accordingly, a gas and liquid separator according to aspects of the present invention removes gas included in non-reacted fuel by using a gas and liquid separating film, without any separate power sources, and supplies the non-reacted fuel to a fuel cell, enabling a more compact and highly efficient fuel cell system.

## Description

The present invention relate to an air and liquid separator used in a fuel cell, and more particularly, to an air and liquid separator separating and exhausting gas included in recovered fuel usi ng an air and liquid separating film.

### Description of the Related Art

Fuel cells can be classified as polymer electrolyte fuel cells and direct methanol fuel cells operated at a normal temperature of 100°C or less, phosphoric acid fuel cells operated at about 150°C to 200°C, molten carbonate fuel cells operated at a high temperature of 600°C to 700°C, and solid oxide fuel cells operated at a high temperature of 1000° or more, etc. These respective fuel cells are basically similar in terms of the operating principles of generating electricity, but are different in terms of the types of fuels used, catalyzers and electrolytes, etc.

In relation to the other fuel cells, the direct methanol fuel cell (DMFC) can be more compactly constituted since the DMFC uses met hanol as a direct fuel without using a reformer reforming raw material fuel to generate hydrogen. Also, the DMFC can be operated at a low temperature so that the DMFC can be used as a power source of portable electronic equipment, etc.

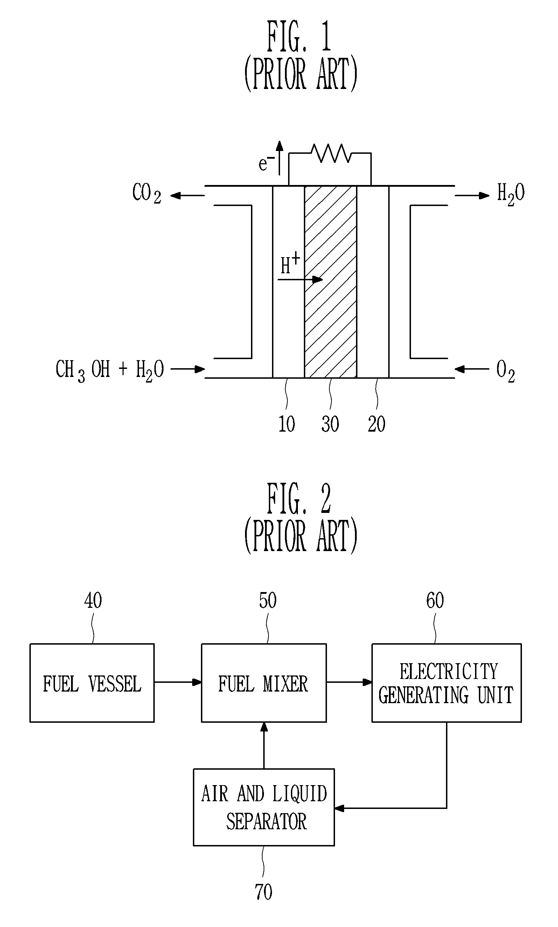

FIG. 1 is a schemati c view showing an electrode -electrolyte polymeric composite of a general DMFC. Referring to FIG. 1, the electrode -electrolyte polymeric composite of a general DMFC is configured such that an electrolyte membrane 30 is interposed between an anode electrode 10 and a cathode electrode 20. The methanol (CH₃OH) and water (H₂O; hereinafter, the mixture of methanol and water is referred to as fuel) supplied to the anode electrode 10 is resolved, by a catalyst, into carbon dioxide (CO₂), a hydrogen ion (H⁺) and an electron (e⁻). The hydrogen ion is moved to the cathode electrode 20 through the electrolyte membrane 30, and the electron is moved to the cathode electrode 20 through an external electric wire. Oxygen (O₂) generally included in the air is supplied to the cathode electrode 20, and the electron, the hydrogen ion, and the oxygen moved from the anode electrode 10 are reacted by the catalyst to generate water. The reaction equation of an electro -chemical reaction generated between the anode electrode 10 and the cathode electrode 20 is described as follows:

[Reaction equation 1] Anode electrode: CH₃OH + H₂O → CO₂ + 6H⁺ + 6e⁻ Cathode electrode: 3/2O₂ + 6H⁺ + 6e⁻ → 3H₂O Overall: CH₃OH + 3/2O₂ → CO₂ + 3H₂O

However, during the substantial operating process of a fuel cell, parts of the fuel flowed into the anode electrode 10 are not completely reacted and are exhausted together with the carbon dioxide generated in the anode electrode 10. Also, when methanol is supplied to the anode electrode 10 as the fuel, the methanol directly passes through the electrolyte membrane 30 so that parts of the fuel are incorporated t o the cathode electrode 20 and are thus exhausted together with the water generated in the cathode electrode 20 by a cross over phenomenon transiting methanol to the cathode electrode 20. As described above, during the operating process of a fuel cell, car bon dioxide, water as well as non-reactive fuel can be mixed to be exhausted from the anode electrode 10 and the cathode electrode 20 of the electrode -electrolyte polymeric composite.

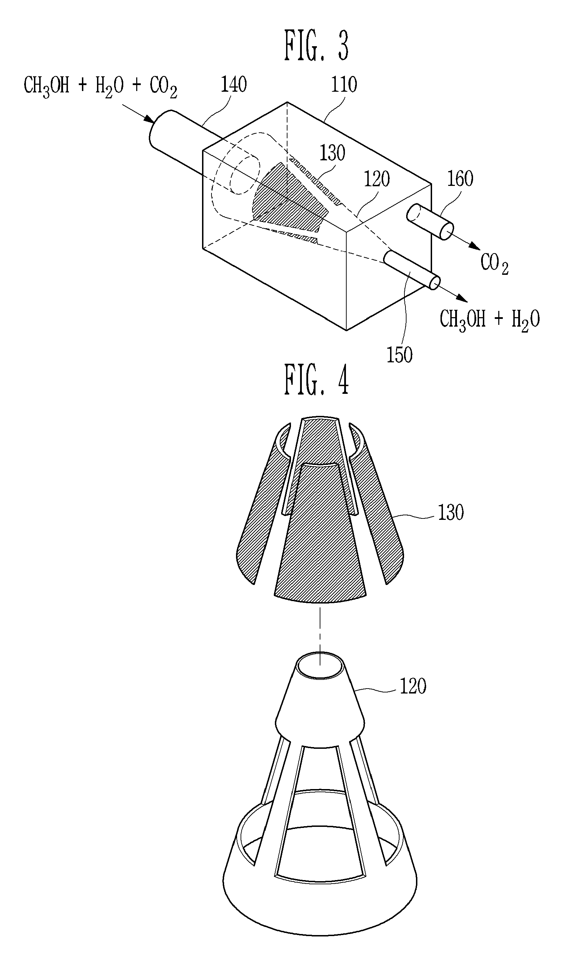

FIG. 2 is a block view showing a process recovering non-reactive fuel (fuel that does not react in the anode electrode 10) of a direct methanol fuel cell system. An electricity generating unit 60, which includes one or more electrode-electrolyte polymeric composites, can have a structure such that at least one of the electrode-electrolyte polymeric composites is stacked. In the electricity generating unit 60, carbon dioxide and water, which are generated after an electro-chemical reaction in the electrode-electrolyte polymeric composite, are exhausted together with non -reactive fuel, and flow into an air and liquid separator 70. The carbon dioxide is removed by the air and liquid separator 70 such that only the water and the non-reactive fuel flow into a fuel mixer 50. A high concentration of the fuel stored in a fuel vessel 40 also flows into the fuel mixer 50, generating fuel of concentration required to operate the electricity generating unit 60. The fuel is supplied again to the electricity generating unit 60.

At this time, if carbon dioxide is not efficiently removed by the air and liquid separator 70, carbon dioxide flows into the fuel mixer 50, thus possibly causing an error in an operation. Also, if carbon dioxide flows into the electrode-electrolyte polymeric composite of the electricity generating unit 60, the area that fuel contacts an anode electrode 10 is decreased due to the carbon dioxide so that the efficiency of the fuel cell decreases. Meanwhile, when an apparatus requiring a power source, for example, the air and liquid separator 70, is added in order to remove the carbon dioxide from the non-reactive fuel, the efficiency of the fuel cell can be decreased by consuming unnecessary electricity.

### SUMMARY OF THE INVENTION

Aspects of the present invention provide an air and liquid separator that can separate and exhaust carbon dioxide of non-reactive fuels by using an air and liquid separating film, without any separate power sources.

According to an aspect of the present invention, there is provide an air and liquid separator used in a fuel cell using releasing non -reactive liquid fuel liquid fuel and a gas, the air and liquid separator including: a fuel guidance pipe adapted for receiving the non-reactive liquid fuel and the gas and having one or more opening portions on a surface thereof; and an air and liquid separat ing film provided on each of the opening portions of the fuel guidance pipe and adapted for transmitting only gas to an outside of the fuel guidance pipe.

The air and liquid separator may further include a housing including the fuel guidance pipe and the air and liquid separating film and thereby separating them from the components of the fuel cell. A gas outlet adapted for exhausting the gas transmitted through the air and liquid separating film to the outside of the separator may be provided.

The diameter of one side of the fuel guidance pipe in which fuel flows may be larger than that on other side thereof, and the area on one side of each opening portion of the fuel guidance pipe in which fuel flows can be wider than that on the other side thereof. In other words, the fuel guidance pipe may comprise a first side, receiving the non -reactive fuel and the gas and having a first diameter; and a second side, opposite the first side and having a second diameter, wherein the first diameter is larger than the se cond diameter. The one or more opening portions may each comprise an opening portion first side, closest to the first side of the fuel guidance pipe; and an opening portion second side, closest to the second side of the fuel guidance pipe (120), wherein th e opening portion first side is wider than the opening portion second side.

The opening portions of the fuel guidance pipe may be uniformly positioned around the surface of the fuel guidance pipe. A distal portion of the fuel guidance pipe flowing out fuel may be filled with porous material. In other words, the separator further comprises a fuel outflow pipe connected to the fuel guidance pipe and adapted to release the non-reactive fuel. The fuel guidance pipe may comprises a fuel absorbing layer connect ed to the fuel outflow pipe and made of a porous material capable of absorbing only the non-reactive fuel and preventing the gas from being released to the fuel outflow pipe. The fuel guidance pipe may be a conduit provided in a zigzag. The one or more ope ning portions may be provided as a meshed surface of fuel guidance pipe.

According to another aspect of the present invention, there is provided a fuel cell system including: a fuel vessel to store liquid fuel; a fuel mixer to generate mixing fuel by mixing the fuel and water; an electricity generating unit to generate electricity through an electro-chemical reaction by using the mixing fuel and oxygen; and an air and liquid separator to separate gas included in the non -reactive fuel of the mixing fuel exhausted from the electricity generating unit, wherein the air and liquid separator includes a fuel guidance pipe having one or more opening portions on a surface thereof, and an air and liquid separating film provided on the opening portions of the fuel guid ance pipe and transmitting only the gas.

The diameter of one side of the fuel guidance pipe in which fuel flows may be larger than that on the other side thereof, and the area on one side of each opening portion of the fuel guidance pipe in which fuel flow s can be wider than that on the other side thereof.

The opening portions of the fuel guidance pipe may be uniformly positioned around the surface of the fuel guidance pipe, and a bottom end of the fuel guidance pipe flowing out fuel may be filled with por ous material.

The fuel cell system may be a direct methanol fuel cell system.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a schematic view showing an electrode -electrolyte polymeric composite of a general direct methanol fuel cell;
FIG. 2 is a block view showing a process of recovering non -reactive fuel of a direct methanol fuel cell system;
FIG. 3 is a perspective view showing an air and liquid separator according to an embodiment of the present invention;
FIG. 4 is an exploded perspective view of a fuel guidance pipe and an air and liquid separating film according to an embodime nt of the present invention;
FIG. 5 is a perspective view showing an air and liquid separator according to another embodiment of the present invention;
FIG. 6 is a perspective view showing an air and liquid separator according to yet another embodiment of the present invention; and
FIGs. 7A and 7B are perspective views showing an air and liquid separator according to another embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by refer ring to the figures.

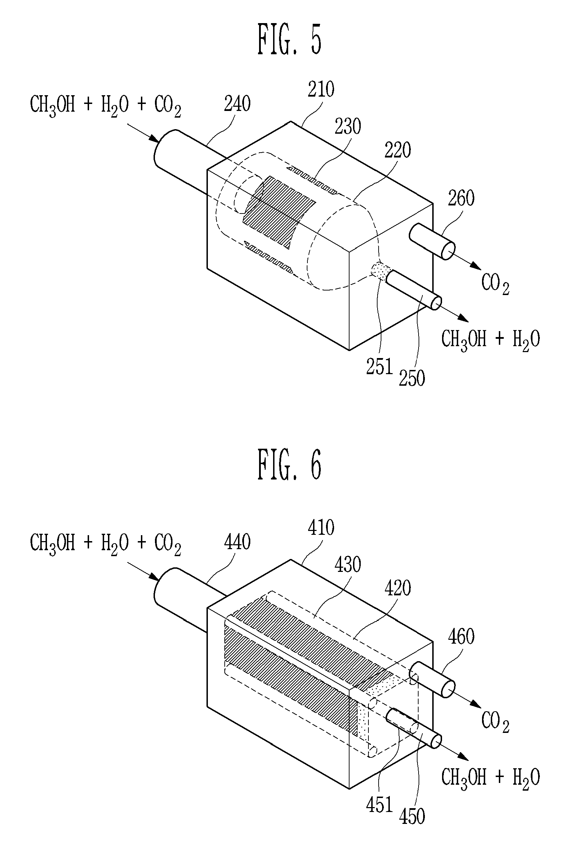

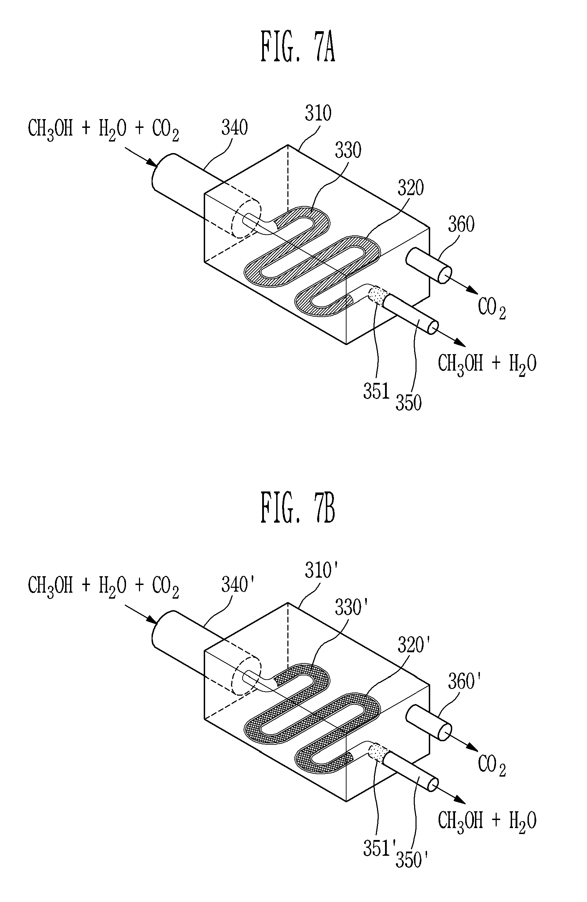

FIG. 3 is a perspective view showing an air and liquid separator according to an embodiment of the present invention, and FIG. 4 is an exploded perspective view of a fuel guidance pipe 120 and an air and liquid separating film 130 according to an embodiment of the present invention.

Referring to FIGs. 3 and 4, an air and liquid separator includes a housing 110, a fuel inflow pipe 140, a fuel guidance pipe 120, an air and liquid separating film 130, a gas outlet 160, and a fuel outflow pipe 150.

A first end of the fuel inflow pipe 140 is connected to an electricity generating unit (not shown) of a fuel cell so that the non-reactive fuel and the carbon dioxide exhausted from the fuel cell can flow in. A second end of the fuel inflow pipe 1 40 is connected to one end of the fuel guidance pipe 120 provided inside of the housing 110 so that the fluid can flow through.

According to an aspect of the present invention, the fuel guidance pipe 120 is manufactured from a material that is corrosion -resistant and impervious against the fuel. The fuel guidance pipe 120 is provided inside of the housing 110 and is a hollow pipe that may, although not necessarily, have a gradually decreasing diameter. The second end of the fuel guidance pipe 120, of which a diameter is relatively smaller than the first end of the fuel guidance pipe 120, is connected to the fuel outflow pipe 150 so that fluid can flow in and out. At least two opening portions are formed on the surface of the fuel guidance pipe 120. The openi ng portions may be, although not necessarily, uniformly distributed around the fuel guidance pipe 120. That is, the distances between each adjacent opening portion are equal. Furthermore, the opening portions may, although not necessarily, be provided in an asymmetrical shape. For example, the width of the side connected to the fuel inflow pipe 140 may be wider than that of the side connected to the fuel outflow pipe 150. The air and liquid separating film 130 is provided on each of the opening portions. The air and liquid separating film 130 selectively transmit only gas and not liquid.

The fuel outflow pipe 150 is connected to the second end of the fuel guidance pipe 120 so that the fluid can flow in and out, as described above. Also, the diameter of the fuel outflow pipe 150 may be smaller than that of the fuel inflow pipe 140.

Accordingly, the carbon dioxide and the non -reactive fuel exhausted from the fuel cell flow into the fuel guidance pipe 120 through the fuel inflow pipe 140. The carbon dioxide that flows into the fuel guidance pipe 120 contacts the air and liquid separating film 130 provided on the surface of the fuel guidance pipe 120. Since the air and liquid separating film 130 is uniformly installed around the fuel guidance pipe 120, the carbon dioxide can contact any one of the air and liquid separating films 130 even when the air and liquid separator rotates. Since the width of the air and liquid separating film 130 on the side of the fuel inflow pipe 140 is wider than that of the air and liqu id separating film 130 on the side of the fuel outflow pipe 150, the carbon dioxide contacts the wider area of the air and liquid separating film 130 in the early stage of flowing into the fuel guidance pipe 120. The carbon dioxide is exhausted to the outs ide of the fuel guidance pipe 120 through the air and liquid separating film 130, and is exhausted outside of the housing 110 through the gas outlet 160 installed on one side of the housing 110. The non-reactive fuel removing the carbon dioxide can be supp lied to a fuel mixer (not shown) through the fuel outflow pipe 150.

If carbon dioxide exhausted through the air and liquid separator 130 contacts the components of the fuel cell system, corrosion may occur. However, if all of the components of the fuel cell system are manufactured from corrosion-resistant material in order to prevent the corrosion, the manufacturing expenses thereof are increased. Therefore, the housing 110 may be manufactured from corrosion-resistant material having a water -tight and/or air-tight structure in order to prevent leaked gas and liquid from leaking out.

lt is understood that a plurality of gas outlets on one or multiple sides of the housing 110 may be provided in order to facilitate the flow of gas.

FIG. 5 is a perspective view showing an air and liquid separator according to another embodiment of the present invention. Referring to FIG. 5, the air and liquid separator further includes a fuel absorbing layer 251, in addition to the air and liquid separator as shown in FIG. 3. Th at is, the air and liquid separator includes the fuel absorbing layer 251, the housing 210, the air and liquid separating film 230, the fuel guidance pipe 220, the gas outlet 260, and the fuel outflow pipe 250.

The fuel absorbing layer 251 is interposed between a fuel guidance pipe 220 and a fuel outflow pipe 250, and includes a porous material. Since the fuel absorbing layer 251 absorbs only liquids (i.e., the non-reactive fuel), it is therefore possible to prevent any carbon dioxide that is yet to be exhausted while passing through the fuel guidance pipe 220 from flowing to the fuel outflow pipe 250. It is understood that if the air and liquid separator includes the fuel absorbing layer 251, then the fuel guidance pipe 220 does not necessarily include ope ning portions and the air and liquid separating film 230. That is, the fuel absorbing layer 251 can filter through only the fuel and prevent the gas from re-entering the fuel cell, and any opening on the fuel outflow pipe 250 can therefore exhaust the gas.

FIG. 6 is a perspective view showing an air and liquid separator according to still another embodiment of the present invention. Referring to FIG. 6, the air and liquid separator includes a fuel absorbing layer 451, a housing 410, an air and liquid sep arating film 430, a fuel guidance pipe 420, a gas outlet 460, and a fuel outflow pipe 450. As illustrated in FIG. 6, the shape of the fuel guidance pipe 420 is a hexahedron. The illustrated structure has an advantage in that an air and liquid separating fi Im 230 may be easily attached to the fuel guidance pipe 420. However, it is understood that the fuel guidance pipe 420 may be any shape.

FIGs. 7A and 7B are perspective views showing an air and liquid separator according to another embodiment of the prese nt invention.

Referring to FIGs. 7A and 7B, the illustrated air and liquid separator includes a fuel absorbing layer 351, a housing 310, an air and liquid separating film 330, a fuel guidance pipe 320, a gas outlet 360, and a fuel outflow pipe 350. As illustrated in FlGs. 7A and 7B, the shape of the fuel guidance pipe 320 is a long conduit provided in a zigzag. However, it is understood that the fuel guidance pipe 320 may be any shape.

The air and liquid separating film 330 illustrated in FIG. 7A is attache d by incising parts of the fuel guidance pipe 320, or, as illustrated in FIG. 7bB, parts of the fuel guidance pipe 320' are a mesh and the air and liquid separating film 330' covers the mesh. It is understood that the fuel guidance pipe 320 having any sha pe may include, either entirely or partly, a meshed surface.

In the following a method of separating non-reactive liquid fuel and a gas released from a fuel cell according to the present invention is illustrated. In a first step, a first side of a fuel guidance pipe receives the non -reactive fuel. Then, only the gas is released through a separating film provided on one or more opening portions of the fuel guidance pipe (second step). Then, the non-reactive fuel is released to the fuel cell through a second side, opposite the first side, of the fuel guidance pipe (third step).

An air and liquid separator according to aspects of the present invention removes gas included in non-reactive fuel by using an air and liquid separating film, without any separate power sources, and supplies the non -reactive fuel to a fuel cell, thus enabling a more compact and high efficient fuel cell system.

## Claims

1. An air and liquid separator used in a fuel cell releasing non -reactive liquid fuel and a gas, the air and liquid separator comprising:
a fuel guidance pipe (120) adapted for receiving the non -reactive liquid fuel and the gas and having one or more opening portions on a surface thereof; and
an air and liquid separating film (130) provided on each of the opening por tions of the fuel guidance pipe (120) and adapted for transmitting only the gas to an outside of the fuel guidance pipe (120).

2. The air and liquid separator as claimed in claim 1, further comprising:
a housing (110) including the fuel guidance pipe (120) and the air and liquid separating film (130).

3. The air and liquid separator as claimed in claim 2, further comprising:
a gas outlet (160) provided on the housing (110) and adapted for exhausting the gas transmitted through the air and liquid separating film (130) to an outside of the separator.

4. The air and liquid separator as claimed in claim 1, wherein the fuel guidance pipe (120) comprises:
a first side, receiving the non -reactive fuel and the gas, having a first diameter; and
a second side, opposi te the first side, having a second diameter,
wherein the first diameter is larger than the second diameter.

5. The air and liquid separator as claimed in claim 4, wherein the one or more opening portions each comprises:
an opening portion first side, close st to the first side of the fuel guidance pipe (120); and
an opening portion second side, closest to the second side of the fuel guidance pipe (120),
wherein the opening portion first side is wider than the opening portion second side.

6. The air and liquid separator as claimed in claim 1, wherein the one or more opening portions of the fuel guidance pipe (120) are uniformly positioned around the surface of the fuel guidance pipe.

7. The air and liquid separator as claimed in claim 1, further comprising:
a fuel outflow pipe (150) connected to the fuel guidance pipe (120) and adapted to release the non-reactive fuel therefrom.

8. The air and liquid separator as claimed in claim 7, wherein the fuel guidance pipe (120) comprises a fuel absorbing layer (251) con nected to the fuel outflow pipe (150) and made of a porous material capable of absorbing only the non -reactive fuel and preventing the gas from being released to the fuel outflow pipe (150).

9. The air and liquid separator as claimed in claim 1, wherein th e fuel guidance pipe (120) is a conduit provided in a zigzag.

10. The air and liquid separator as claimed in claim 1, wherein the one or more opening portions are provided as a meshed surface of fuel guidance pipe (120).

11. A fuel cell system comprising:
a fuel vessel for storing a liquid fuel;
a fuel mixer for generating a mixing fuel by mixing the fuel and water;
an electricity generating unit for generating electricity through an electro -chemical reaction by using the mixing fuel and oxygen; and
an air and liquid separator according to any of claims 1 to 10 for separating gas and a non-reactive fuel, which is the mixing fuel that is not reacted in the electro-chemical reaction, exhausted from the electricity generating unit.
